# EUROPEAN PATENT SPECIFICATION

(11) **EP 0 490 661 B1**
(45) Date of publication and mention of the grant of the patent: **09.04.1997**
(21) Application number: 91311535.8
(22) Date of filing: 11.12.1991
(51) Int. Cl.: D06N 7/00, B65G 15/30

(54) **Method of producing industrial fabrics**
Verfahren zur Herstellung von Industriegewebe
Méthode pour la fabrication des tissus pour l'industrie

(30) Priority: 14.12.1990 GB 9027143
(43) Date of publication of application: 17.06.1992
(73) Proprietor: SCAPA GROUP PLC, Blackburn, Lancashire BB2 6AY (GB)
(72) Inventor: Brookfield, Frank, Rochdale, Lancashire (GB)
(74) Representative: Quest, Barry

(56) References cited:
- EP-A- 0 396 765
- DE-A- 2 601 569
- FR-A- 2 178 005
- FR-A- 2 400 658
- Derwent Publications Ltd., London, GB; AN 88-303664

## Description

The invention concerns a method for the manufacture fusing and laminating belts.

Endless belts for use in fusing and laminating are known which comprise a base fabric having a coating of polytetra fluoroethylene (P.T.F.E.) applied thereto. Whilst the base fabric is normally of woven open-ended form, the ends being subsequently joined, it is preferred that such fabrics are woven endless thus avoiding seam-mark off.

There are several patent documents which disclose an industrial fabric including a layer containing beads. The patent document FR-A-2178005 discloses a PTFE-containing composition mixed with glass spheres forming a fabric which is airtight for use in inflatable structures. FR-A-2178005 is concerned with the provision of an air tight fabric.

FR-A-2400658 relates to a flexible base to which is applied a covering material comprising silicates wherein the silicates are added to improve abrasion resistance. The coating is applied by known methods.

DE-B-2601569 is concerned with the coating of a substrate with a fluorinated organic polymer coating which is free of mud cracks or pinholes thus providing a more abrasion-resistant material.

EP-A-396765 discloses a stain free polyester fabric having a number of resin coatings applied thereto, wherein inorganic free particles are used to trap dyes migrating through the resin.

JP-A-63222852 relates to a coated fabric for use as roofing.

Smoothness of surface is an important consideration in fusing and laminating belts, particularly in the case of belts for use in the context of high quality fine fabric laminations, and undue prominence at the belt surface of the underlying weave pattern can given rise to unacceptable marking in the fabric lamination. These problems are not considered by the prior art documents mentioned above.

According to the present invention there is proposed a method of producing an industrial fabric, particularly a fusing or laminating belt which includes the steps of providing a woven base fabric, said fabric having opposed fabric surfaces and recesses in said surfaces formed by and between yarns of the fabric present at said surfaces, applying successive coating layers of a synthetic plastics coating material to said base fabric, wherein the said application of successive coating layers includes the step of filling the recesses of at least one of said opposed fabric surfaces by the application, utilizing a lick coating technique, of at least one of said synthetic plastics coating layers which contain silicate bodies, followed by a further coating, utilizing a dip coating technique, of at least one of said synthetic plastic coating layers thereby forming a coated fabric with substantially no manifestation of the surface profile of the base fabric at the belt surface and wherein the initial coating step of filling the recesses is a lick coating step.

According to a preferred feature, a bonding coat is applied to the base fabric prior to application of the coating layers containing silicate bodies.

By the method of the present invention there is proposed a fusing or laminating belt, comprising an endless woven base fabric, said base fabric having opposed fabric surfaces and recesses in said surfaces formed by and between yarns of the fabric present at said surfaces, successive coating layers of synthetic plastics material being applied to the fabric by lick coating and at least one subsequent dip coating step, the lick coated layer comprising silicate bodies such that manifestation of the surface profile of the base fabric at the belt surface is substantially avoided.

Preferably the silicate bodies comprise glass beads having a diameter of between 20 and 250 micrometers.

The invention will now be described further, by way of example only, with reference to the accompanying diagrammatic drawings wherein:-
Fig. 1 illustrates the method steps of the invention as exemplified by one embodiment thereof; and
Fig. 2 is a longitudinal section taken through a fabric coating in accordance with the method of Fig. 1.

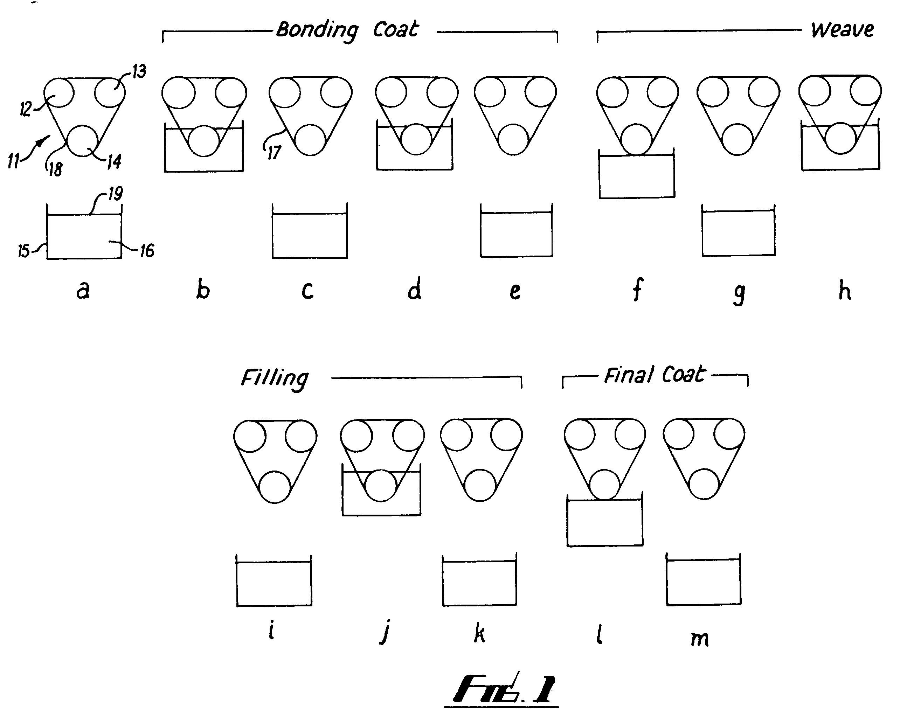

Referring now to the drawings, and in particular to Fig. 1 thereof, in coating a woven base fabric to provide a laminating belt an endless woven fabric 11 is supported, under tension, on a plurality of horizontal rollers 12,13,14 arranged in spaced apart disposition above a supply of coating material contained in a tank 15 and is successively engaged with and withdrawn from coating material 16 present in the tank 15 to take up material therefrom.

Conveniently the tank 15 is raised or lowered so as to bring the coating material 16 into contact with the belt 17 for the time being existing on the rollers 12, 13, 14, the extent of movement being such as to cause the lower part 18 of the belt 17 to become immersed in the coating material 16 or simply to engage the surface 19 thereof according to the nature of the coating step required.

In the arrangement illustrated three rollers are provided, two such rollers 12, 13 being arranged at a common level and serving to support the fabric 11/belt 17 and the third roller 14 being at a lower level and being after the nature of a guide roller to locate the lower part of the fabric/belt. At least one of the upper rollers 12, 13 is driven so as to progress the fabric/belt about the roller arrangement.

The process steps are shown in Fig. 1 and comprise, in succession, dip coating steps, Figs 1b to 1e, a lick-coating step, Figs. 1f and 1g, two dip-coating steps, Figs 1h to 1k, and a further lick-coating step, Figs. 1l and 1m, each step including drying/sintering of the applied layer, Figs. 1c, 1e, 1g, 1i, 1k and 1m.

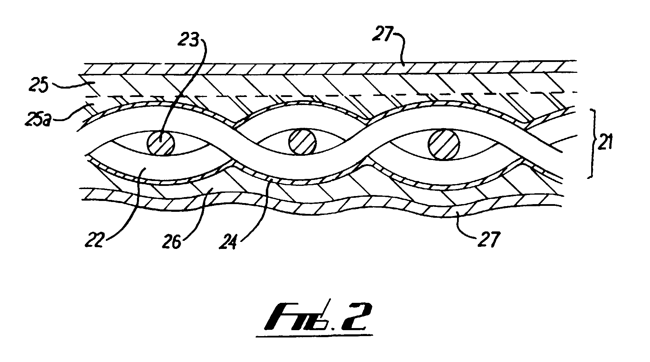

The base fabric 21, see Fig 2, is of plain weave construction and is woven from 1100 dtex Kevlar or Technora multi-filament yarns 22, 23 the warp and weft densities in the loom being 11.22 and 9.45 yarns/cm. The fabric weight is 225 grams/metre² and the fabric thickness is 0.36 mm.

On tensioning of the base fabric the length thereof increases by approximately 1.9% whilst the width reduces by approximately 4.4%, the fabric thickness increasing to 0.43 mm.

The initial dip coating steps serve to apply a bonding coat 24 to the base fabric 21 and the mix is merely a polytetrafluoroethylene bonding material. For the initial lick coating step, which step forms coating layer 25a at the support side of the base fabric, and the remaining dip coating steps, which apply coating material to both sides of the fabric, that is to say for the weave filling steps which form coating layers 25, 26 at the respective sides of the fabric, the mix also includes silicate bodies, typically solid glass beads having a diameter of between 53 and 105 µm but preferably monosized at approximately 90 µm. Indeed, it is believed that the use of monosized beads offers improved weave filling as compared with the use of beads of a size randomly distributed with a range of diameters. Typically, the silicate bodies are present in the relevant coating layers in like amount by weight to the dried/sintered P.T.F.E. coating material. The final coating step applies a top coat 27 of P.T.F.E. having metallic particles/flake included therein. An additional weave final coating step will ordinarily be applied, notwithstanding that such additional step is not shown in Fig. 1.

Thus, the bonding coat 24 consists of two layers at each side of the belt to give a total coating weight of 250 grams/metre², whilst the weave filling coats 25, 26 which respectively comprise three coating layers and two coating layers, have a total weight of 400 grams/metre². The final or top coats 27, each of which comprises two layers, have a total weight of 100 grams/metre². The finished thickness of the coated belt is 0.69 mm.

The fabric is illustrated diagrammatically in Fig. 2, it being seen that the bonding layers, which layers promote adhesion of the subsequent coating layers to the base fabric, permeate the surface of the multifilament yarns and bridge the interstices in the fabric and that the glass beads serve to fill the recesses in and defined by the bonding layers to give a sustantially flat outer surface to the belt particularly at the support side thereof, the top coat being of sensibly constant thickness and thus having a surface form of similar character to that formed by the weave filling layers. It will be appreciated, of course, that, after coating, the belt will be calendered.

The invention is not restricted to the detail of the embodiment hereinbefore described, since alternatives will readily present themselves to one skilled in the art. Thus, for example, whilst the bonding coats do improve adhesion of the weaving filling layers to the base weave, the bonding coats may, in some circumstances, be omitted.

The number of weave-filling layers may be varied according to specific requirements and more than one such layer may be applied by lick coating. The solids content of the PTFE dispersion may be other than 50%, indeed an increased solids content, say to 70%, is desirable as this reduces the tendency of the coating to contour the fabric weave structure. The increased solids content also facilitates weave filling and drying/sintering of the PTFE, and has advantageous effects on the thermal characteristics of the belt in use.

Other weave structures and other yarns, for example glass yarns, may, of course, be used, and the PTFE coating material may include such additives as are appropriate to introduce requisite characteristics into the belt according to its intended end use. For example, it may be found convenient to use metallized beads, whether in the weave filling layers and/or in the top coat, and thus dispense with the need to include metallic particles/flake in the top coat.

## Claims

1. The method of producing a fusing or laminating belt which incudes the steps of providing an endless woven base fabric (11), said fabric (11) having opposed fabric surfaces and recesses in said surfaces formed by and between yarns of the fabric present at said surfaces, applying successive coating layers of a synthetic plastics coating material (24,25,26) to said base fabric (11), wherein the said application of successive coating layers includes the step of filling the recesses of at least one of said opposed fabric surfaces by the application, utilizing a lick coating technique, of at least one of said synthetic plastics coating layers which contain silicate bodies, followed by a further coating, utilizing a dip coating technique, of at least one of said synthetic plastic coating layers thereby forming a coated fabric with substantially no manifestation of the surface profile of the base fabric at the belt surface and wherein the initial coating step of filling the recesses is a lick coating step.

2. The method as claimed in claim 1, wherein each coating layer is dried/sintered prior to application of a succeeding layer.

3. The method as claimed in claim 1 or 2, including the step of applying a bonding coat to the base fabric prior to the application of the silicate body containing layers.

4. The method as claimed in any one of claims 1 to 3, wherein the silicate bodies exist in each coating layer in like amount by weight to the coating material.

5. The method as claimed in any one of claims 1 to 4 including the further step of calendering.

## Patentansprüche

1. Verfahren zum Herstellen eines Schmelz- oder Laminierungs-Bands, das die Schritte enthält: Bereitstellen eines endlosen, gewobenen Basisgewebes (11), das einander gegenüberliegende Gewebeoberflächen und in den Oberflächen vorhandene Ausnehmungen, die durch und zwischen an den Oberflächen vorhandenen Fäden des Gewebes ausgebildet sind, aufweist, Aufbringen von aufeinanderfolgenden Beschichtungsschichten aus einem synthetischen Kunststoffbeschichtungsmaterial (24, 25, 26) auf das Basisgewebe (11), wobei das Aufbringen der aufeinanderfolgenden Beschichtungsschichten den Schritt der Ausfüllung der Ausnehmungen auf mindestens einer der einander gegenüberliegenden Gewebeoberflächen durch dieses Aufbringen enthält, Einsetzen einer Leckbeschichtungstechnik bei mindestens einer der synthetischen Kunststoffbeschichtungsschichten, die Silikatkörper enthalten, woran sich eine weitere Beschichtung anschließt, Einsetzen einer Tauchbeschichtungstechnik bei mindestens einer der synthetischen Kunststoffbeschichtungsschichten, wodurch ein beschichtetes Gewebe hergestellt wird, bei dem sich das Oberflächenprofil des Basisgewebes an der Bandoberfläche im wesentlichen nicht manifestiert, und wobei der anfängliche Beschichtungsschritt der Auffüllung der Ausnehmungen ein Leckbeschichtungsschritt ist.

2. Verfahren nach Anspruch 1, bei dem jede Beschichtungsschicht vor der Aufbringung einer nachfolgenden Schicht getrocknet/gesintert wird.

3. Verfahren nach Anspruch 2 oder 3, das den Schritt der Aufbringung einer Verbindungsschicht auf das Basisgewebe vor der Aufbringung der Schichten, die Silikatkörper enthalten, umfaßt.

4. Verfahren nach einem der Ansprüche 1 bis 3, bei dem die Silikatkörper in jeder Beschichtungsschicht in der gleichen Gewichtsmenge wie das Beschichtungsmaterial vorhanden sind.

5. Verfahren nach einem der Ansprüche 1 bis 4, das den weiteren Schritt der Kalandrierung enthält.

## Revendications

1. Procédé de fabrication d'une courroie de fusion ou de laminage qui comporte les étapes de fournirture d'un tissu de base sans fin (11), ledit tissu (11) ayant des surfaces de tissu opposées et des interstices dans lesdites surfaces formées par et entre les fils du tissu présent auxdites surfaces, l'application de couches de revêtement successives d'un matériau de revêtement de matière plastique synthétique (24, 25, 26) audit tissu de base (11), dans lequel ladite application de couches de revêtement successives comprend l'étape de remplissage des interstices d'au moins une desdites surfaces de tissu opposées par l'application, en utilisant une technique de revêtement par "léchage", d'au moins une desdites couches de revêtement de matière plastique synthétique qui contiennent des corps silicatés, suivie par un autre revêtement, utilisant une technique de revêtement à immersion, d'au moins une desdites couches de revêtement de matière plastique synthétique formant ainsi un tissu recouvert avec sensiblement aucune trace du profil de la surface du tissu de base à la surface de la courroie et dans lequel l'étape de revêtement initiale de remplissage des interstices est une étape de revêtement par "léchage".

2. Procédé selon la revendication 1, dans lequel chaque couche de revêtement est séchée/comprimée avant l'application de la couche suivante.

3. Procédé selon la revendication 1 ou 2, comprenant l'étape d'application d'un revêtement de liaison au tissu de base avant l'application des couches minces contenant les corps silicatés.

4. Procédé selon l'une quelconque des revendications 1 à 3 dans lequel les corps silicatés sont présents dans chaque couche de revêtement dans une proportion massique similaire au matériau de revêtement.

5. Procédé selon l'une quelconque des revendications 1 à 4, comprenant l'étape supplémentaire de calendrage.
